# EUROPÄISCHE PATENTSCHRIFT

(11) **EP 2 427 525 B1**
(45) Veröffentlichungstag und Bekanntmachung des Hinweises auf die Patenterteilung: **20.07.2016**
(21) Anmeldenummer: 10719323.7
(22) Anmeldetag: 04.05.2010
(51) Int. Cl.: C09J 5/06, C09J 11/04, C09J 11/06

(54) **KLEBSTOFF-ZUSAMMENSETZUNG FÜR LÖSBARE KLEBEVERBINDUNGEN UND MODIFIKATION DER VERKAPSELUNGSMATERIALIEN FÜR GEZIELTE ENERGIEEINBRINGUNG**
ADHESIVE COMPOSITION FOR DETACHABLE ADHESIVE BONDS AND MODIFICATION OF ENCAPSULATING MATERIALS FOR A TARGETED ENERGY SUPPLY
COMPOSITION D'ADHÉSIF POUR DES LIAISONS PAR COLLAGE LIBÉRABLES ET MODIFICATION DES MATÉRIAUX D'ENCAPSULAGE POUR UN APPORT ÉNERGÉTIQUE CIBLÉ

(30) Priorität: 04.05.2009 DE 102009019483
(43) Veröffentlichungstag der Anmeldung: 14.03.2012
(73) Patentinhaber: Airbus Defence and Space GmbH, 85521 Ottobrunn (DE); Fraunhofer-Gesellschaft zur Förderung der angewandten Forschung, 80686 München (DE)
(72) Erfinder: BAUER, Monika, 15712 Königs Wusterhausen (DE); CONCORD, Arnaud, 30 453 Hannover (DE); LANGKABEL, Eike, 41844 Wegberg (DE); LUINGE, Hans, 81545 München (DE); WACHINGER, Georg, 83026 Rosenheim (DE)
(74) Vertreter: Kopf Westenberger Wachenhausen Patentanwälte PartG mbB
(86) Internationale Anmeldenummer: PCT/EP2010/056031
(87) Internationale Veröffentlichungsnummer: WO 2010/128042

(56) Entgegenhaltungen:
- WO-A2-2004/087826
- WO-A2-2009/138608
- DE-A1-102004 050 949

## Beschreibung

Die vorliegende Anmeldung beansprucht die Priorität der deutschen Patentanmeldung Nr. 10 2009 019 483.5, eingereicht am 04. Mai 2009, deren Inhalt hierin durch Referenz inkorporiert werden.

Die vorliegende Erfindung betrifft Klebstoff-Zusammensetzungen für lösbare Klebeverbindungen auf der Basis von Klebstoffmatrizes und verkapselten Expansionsstoffen. Die Erfindung bezieht sich weiterhin auf deren Verwendung in lösbaren Klebeverbindungen und Verfahren zum Verbinden bzw. Lösen von Klebeverbindungen in Verkehrsmitteln, insbesondere in Luftfahrzeugen.

Insbesondere im Flugzeugbau werden zunehmend verschiedene metallische und/oder nicht-metallische Bauteile durch Verkleben miteinander verbunden, um einerseits den Produktionsprozess zu vereinfachen und um im Verhältnis zu konventionellen Niet-, Schraub- und/oder Schweißverbindungen Gewicht einzusparen. Um solche verbundenen Bauteile reparieren, austauschen, verschrotten oder recyceln zu können, müssen diese Klebeverbindungen jedoch wieder gelöst werden. Häufig gestaltet sich dieser Prozess als relativ schwierig, da die Klebeverbindungen während der Anwendungszeit eine hohe Klebkraft aufbauen und somit ein Lösen der Klebeverbindung nur unter hoher Krafteinwirkung, hohen Temperaturen oder mit Hilfe von chemischen Agenzien möglich ist, wobei die verbundenen Bauteile häufig beschädigt oder sogar zerstört werden. Klebstoff-Zusammensetzungen für lösbare Klebeverbindungen sind in unterschiedlichen Ausführungsformen bekannt. In der Regel bestehen diese Zusammensetzungen aus einer Klebstoffmatrix (oder auch als Bindemittelmatrix bezeichnet) und einem darin verteilten Expansionsstoff. Diese Expansionsstoffe sollen im Falle eines gewollten Lösens der verbundenen Bauteile durch Energieeinbringung expandieren, um so die Klebeverbindung zu schwächen, so dass die Bauteile einfacher getrennt werden können.

Die DE 199 61 940 A1 offenbart eine Klebstoff-Zusammensetzung, deren Bindemittelsystem thermisch aktivierbare Substanzen enthält, die einen Entklebevorgang auslösen können. Diese thermisch aktivierbaren Substanzen sind bei Raumtemperatur fest und feinteilig homogen in der Bindemittelmatrix verteilt. Beim Erwärmen sollen diese Stoffe eine Quellung der Bindemittelmatrix bewirken, eine Phasenumwandlung durchlaufen, zersetzt werden und/oder Gase oder Wasserdampf erzeugen. Klebstoff-Zusammensetzungen, die durch eine thermische Zersetzung eingebrachter Expansionsstoffe wieder lösbare Klebeverbindungen ermöglichen, sind ferner in der US 3,615,960, WO 00/40648 A1 und der DE 10 2004 050 949 A1 beschrieben.

Diese Klebstoff-Zusammensetzungen weisen in ihrer ausgehärteten Form jedoch häufig nur eine geringe Beständigkeit gegenüber hohen Temperaturen, Wasser oder chemischen Angriffen auf, so dass es zu einer vorzeitigen Expansion des Expansionsmittels kommen kann, was zu einer ungewollten Schwächung der Klebeverbindung bereits während der Anwendungszeit führt. Zusätzlich ist häufig bereits die Aushärtungsreaktion dieser Klebstoff-Zusammensetzungen gestört, da es bereits während der Lagerung der Zusammensetzung oder während der Aushärtung zu einer Reaktion zwischen dem Expansionsstoff und weiteren Bestandteilen der ungehärteten Klebstoffmatrix oder der Klebstoffmatrix selbst kommen kann. Des Weiteren sind zum Lösen der Klebeverbindungen häufig hohe Temperaturen über einen langen Zeitraum nötig, um verbundene Bauteile zu lösen, wodurch es zu einer Überhitzung und somit zur Beschädigung oder Zerstörung dieser Bauteile kommen kann.

Daher besteht nach wie vor ein Bedarf an Klebstoff-Zusammensetzungen für lösbare Klebeverbindungen, die sowohl in der ungehärteten als auch ausgehärteten Form eine ausreichende chemische und thermische Beständigkeit aufweisen. Ferner sollen diese Klebstoffe während der Anwendungsdauer in Klebeverbindungen eine ausreichende Klebkraft entwickeln, aber gleichzeitig bei Bedarf leicht zu lösen sein.

Eine Aufgabe der vorliegenden Erfindung ist daher, Klebstoff-Zusammensetzungen für lösbare Klebeverbindungen bereit zu stellen, die während der Anwendungszeit eine ausreichende Klebkraft aufweisen, die aber bei Bedarf leicht gelöst werden können, ohne die verbundenen Bauteile zu beschädigen oder zu zerstören. Eine weitere Aufgabe besteht darin, dass die Klebstoff-Zusammensetzungen eine mindestens gleichwertige mechanische Beständigkeit wie herkömmlichen Klebstoff-Zusammensetzungen aufweisen. Eine zusätzliche Aufgabe besteht darin, dass diese Klebstoff-Zusammensetzungen leicht aufzutragen sind und in der ausgehärteten Form eine ausreichende chemische und thermische Beständigkeit aufweisen. Eine weitere Aufgabe besteht darin, dass die Klebstoff-Zusammensetzungen auch in der ungehärteten Form eine ausreichende chemische und thermische Beständigkeit aufweisen, so dass eine verbesserte Lagerbeständigkeit gewährleistet ist. Eine weitere Aufgabe besteht darin, dass die Klebstoff-Zusammensetzungen eine Klebeverbindung mit verbesserten Alterungseigenschaften und somit eine lange Anwendungsdauer gewährleisten.

Diese und weitere Aufgaben werden gemäß der vorliegenden Erfindung durch die Merkmalskombination der unabhängigen Ansprüche gelöst. Bevorzugte Ausführungsformen ergeben sich durch Kombination mit den Merkmalen der abhängigen Ansprüche. Gemäß einem Aspekt der Erfindung werden Klebstoff-Zusammensetzungen bereit gestellt, worin mindestens ein Expansionsstoff, dessen Partikel mindestens teilweise verkapselt sind, in eine Klebstoffmatrix eingebettet wird. Hierbei kann das Hüllmaterial des verkapselten Expansionsstoffes ferner weitere Additive wie aktive Füllstoffe umfassen. Diese Klebstoff-Zusammensetzungen können auf beliebige zu verbindende Oberflächen von Bauteilen, insbesondere bei Anwendungen in der Luftfahrtindustrie, aufgetragen werden.

Im Unterschied zum Stand der Technik umfassen die erfindungsgemäßen Klebstoff-Zusammensetzungen für lösbare Klebeverbindungen eine Klebstoffmatrix und einem darin verteilten/enthaltenen Expansionsstoff, wobei die Partikel des Expansionsstoffes mindestens teilweise, vorzugsweise vollständig verkapselt und/oder beschichtet sind.

Durch die Verwendung von verkapselten Expansionsstoffen weisen die erfindungsgemäßen Klebstoff-Zusammensetzungen für lösbare Klebeverbindungen eine Reihe verbesserter Eigenschaften auf. Zunächst ist festzuhalten, dass das Lösen entsprechender Klebeverbindungen ohne Beschädigung oder Zerstörung von verbundenen Bauteilen bzw. derer Oberflächen erfolgen kann. Außerdem kann die nötige Energie zum Lösen der Klebeverbindungen gezielt eingebracht werden, so dass eine thermische Belastung oder Überhitzung der verbundenen Bauteile vermieden wird. Des Weiteren ist die einzubringende Energiemenge zum Lösen der Klebeverbindungen im Vergleich zu herkömmlichen Klebstoff-Zusammensetzungen reduziert. Ferner weisen die Klebstoff-Zusammensetzungen nach dem Aushärten in Klebeverbindungen hervorragende Klebeeigenschaften auf. Diese hervorragenden Klebeeigenschaften spiegeln sich in einer verlängerten Haltbarkeit und Anwendungsdauer wieder, wobei die Klebkraft auch mit zunehmender Dauer der Anwendung konstant bleibt und so ein frühzeitiges ungewolltes Lösen von entsprechend verbundenen Bauteilen vermieden wird. Diese ausgehärteten Klebstoff-Zusammensetzungen sind außerdem beständig gegen hohe und niedrige Temperaturen und mechanischen Belastungen wie sie üblicherweise in der Luftfahrtechnik auftreten. Ferner weisen diese Zusammensetzungen eine Beständigkeit gegen Feuchtigkeit, hydraulische Flüssigkeiten wie Skydrol, Kerosin und Frostschutzmittel auf. Zusätzlich gewährleisten die Klebstoff-Zusammensetzungen auch eine verbesserte Stabilität der ungehärteten Zusammensetzung, so dass eine einfachere und kostengünstigere Lagerung der Klebstoffe möglich ist.

Als Klebstoffmatrix (auch als Bindemittelmatrix bezeichnet) der erfindungsgemäßen Klebstoff-Zusammensetzungen können solche Klebstoffe verwendet werden, die üblicherweise in industriellen Anwendungen und insbesondere der Luftfahrtechnik verwendet werden. Die Klebstoffmatrix kann dabei je nach Anwendungszweck nach ihren Eigenschaften ausgewählt werden, um z.B. die Klebkraft, Temperaturwiderstand bei hohen oder niedrigen Temperaturen, Verformbarkeit, Elastizität, Beständigkeit gegenüber Feuchtigkeit, Chemikalien und mechanischen Belastungen zu verändern.

In einigen Ausführungsformen sind physikalisch abbindende Klebstoffe als erfindungsgemäße Klebstoffmatrix verwendbar. Dazu gehören Schmelzklebstoffe, lösemittelhaltige Nassklebstoffe, Kontakt- und Dispersionsklebstoffe, wasserbasierte Klebstoffe sowie Plastisole. Besonders bevorzugt sind hierbei Klebstoffmatrizen auf der Basis von Ethylen-Vinylacetatcopolymeren, Polybutene, Styrol-Isopren-Styrol- bzw. Styrol-Butadien-Styrolcopolymeren, thermoplastischen Elastomeren, amorphen Polyolefinen, linearen, thermoplastischen Polyurethanen, Copolyester, Polyamidharzen, Polyamid/EVA-Copolymeren, Polyaminoamiden auf Basis von Dimerfettsäuren, Polyester- und Polyetheramiden oder Mischungen davon.

In anderen Ausführungsformen sind Reaktionsklebstoffe wie Polymerisationsklebstoffe, Polyadditionsklebstoffe und Polykondensationsklebstoffe als Klebstoffmatrix verwendbar. Dazu gehören Acrylat-Klebstoffe, wie z.B.

Cyanacrylat-Klebstoffe und Methylmethacrylat-Klebstoffe, anaerob härtende Klebstoffe, ungesättigte Polyester-Harze, strahlenhärtende Klebstoffe, Phenolformaldehyd-Klebstoffe, Silikon-Klebstoffe, silanvernetzende Polymer-Klebstoffe, Polyimid-Klebstoffe, Epoxidharz-Klebstoffe und Polyurethan-Klebstoffe.

Unter einem einkomponentigen Klebstoff werden dabei Klebstoffzusammensetzungen verstanden, die sowohl entsprechende Klebstoffmonomere als auch Härter enthalten, wobei der Klebstoff durch eine Veränderung der Umgebungsbedingungen aushärtet. Dies kann beispielsweise durch eine Temperaturerhöhung, Zutritt von Luftfeuchtigkeit, Ausschluss von Luftsauerstoff oder Kontakt mit der Substratoberfläche geschehen. Im Gegensatz dazu werden unter zweikomponentigen Klebstoffen solche Klebstoffzusammensetzungen verstanden, bei denen die entsprechenden Klebstoffmonomere und der Härter getrennt aufbewahrt werden und erst vor der Applikation im korrekten Verhältnis intensiv vermischt werden. Mit dem Kontakt von Klebstoffmonomeren und Härter startet die chemische Reaktion zum Klebstoffpolymer.

Bevorzugt sind hierbei Klebstoffmatrizen auf der Basis ein- bzw. zweikomponentiger Polyurethane, ein- oder zweikomponentiger Polyepoxide, ein- bzw. zweikomponentiger Silikonpolymere, silanmodifizierte Polymere und(Meth)acrylat- und Cyanacrylat-funktionelle Reaktionskleber oder Mischungen davon.

Besonders bevorzugte Ausführungsformen der vorliegenden Erfindung umfassen insbesondere ein- oder zweikomponentige Polyepoxid-Klebstoffe, sowie ein- oder zweikomponentige Polyurethan-Klebstoffe und ein- oder zweikomponentige Acrylat-Klebstoffe, wie z.B. Methylmethacrylat-Klebstoffe oder Cyanacrylat-Klebstoffe als Klebstoffmatrix. Des Weiteren kann jede Klebstoffmatrix, die eine ausreichende einheitliche Mischung mit dem verkapselten Expansionsstoff bildet, für die erfindungsgemäße Erfindung verwendet werden.

Die Klebstoffmatrix der erfindungsgemäßen Klebstoff-Zusammensetzung kann in einer Menge von 50 bis 99 Gew.-%, vorzugsweise in einer Menge von 65 bis 99 Gew.-% und am meisten bevorzugt in einer Menge von 80 bis 99 Gew.-%, jeweils bezogen auf das Gesamtgewicht der Klebstoff-Zusammensetzung vorliegen.

Die zur Herstellung der erfindungsgemäßen Klebstoff-Zusammensetzungen bevorzugte Gruppe von Expansionsstoffen umfasst solche, die bei der Einbringung von Energie expandieren. Als Expansionsstoff werden dabei insbesondere solche Stoffe bezeichnet, die bei der Einbringung von Wärmeenergie in der Klebstoffmatrix ausreichend expandieren, um zu einer Schwächung von entsprechenden Klebeverbindungen zu führen. Darunter werden solche Expansionsstoffe verstanden, die sich bei der Einbringung von Energie zersetzen und dabei Gase wie beispielsweise Stickstoff oder Kohlenstoffdioxid bilden und somit zu einer Ausdehnung des Expansionsstoffes führen. Darunter werden aber auch solche Expansionsstoffe verstanden, die zusätzliche Reagenzien einschließen, die durch das Einbringen von Energie unzersetzt verdampfen und somit ebenfalls zu einer Ausdehnung des Expansionsstoffes führen. Diese gasförmigen oder flüssigen zusätzlichen Reagenzien können den Expansionsstoff wiederum chemisch angreifen und unter Freisetzung von weiteren bzw. neuen Gasen zu einer weiteren Ausdehnung des Expansionsstoffes führen. Die Einbringung von Energie kann durch jede Form von Energie, beispielsweise mittels erhöhter Temperatur oder induktiv durch den Einsatz eines elektrischen Feldes, magnetischen Feldes, elektromagnetischen Feldes, elektrischen Wechselfeldes, magnetischen Wechselfeldes oder elektromagnetischen Wechselfeldes sowie mittels IR-, UV- oder Mikrowellenenergie erfolgen.

Des Weiteren sind solche Expansionsstoffe bevorzugt, die erst bei Temperaturen zwischen etwa 140 und 300 °C, noch bevorzugter bei Temperaturen zwischen etwa 160 und 250 °C und am meisten bevorzugt bei Temperaturen zwischen etwa 180 und 220 °C expandieren , d.h. oberhalb der Gebrauchstemperatur üblicher Klebeverbindungen in der Luftfahrtechnik liegen und nicht toxisch sind.

Expansionsstoffe der vorliegenden Erfindung sind daher alle natürlichen, halbsynthetischen und synthetischen Materialien, insbesondere anorganische und/oder organische Expansionsstoffe, die unter den eingesetzten Bedingungen eine ausreichende Expansion zeigen, um eine Klebeverbindung zu lösen.

Die zur Herstellung der erfindungsgemäßen Expansionsstoffe verwendbaren Materialien umfassen in bestimmten Ausführungsformen schäumbare Stoffe, Treibmittel und intumeszente Stoffe, wobei unter inturneszenten Stoffe solche Stoffe verstanden werden, die bei einer Wärmeeinbringung an Volumen zunehmen, und/oder an Dichte abnehmen.

In einer bevorzugten Ausführungsform ist der organische Expansionsstoff ausgewählt aus der Gruppe bestehend aus Azoisobutyronitril (AIBN), Azodicarbonamid (ADC), Dinitrosopentamethylentramine (DPT), Benzensulfonylhydrazid, N,N'-Dinitroso-N,N'-dimethylterephthalamid, p,p-Oxy-bis-benzensulfonylhydrazid (OBSH), p-Toluolsulfonylhydrazid (TSH), 5-Phenyltetrazol (5-PT), Sulfonylsemicarbazide wie z.B. p-Toluolsulfonylsemicarbazid (PTSS) oder Mischungen daraus. Diese Gruppe organischer Expansionsstoffe zersetzt sich bei einer ausreichenden Energieeinbringung vorzugsweise unter Bildung von Stickstoff und/oder flüchtigen Kohlenwasserstoffen bzw. Kohlenstoffdioxid, die zu einer Expansion des Expansionsstoffes und so zu einer Schwächung der Klebeverbindung führt.

In einer weiteren Ausführungsform umfassen die zur Herstellung der erfindungsgemäßen Expansionsstoffe verwendbaren Stoffe anorganische Expansionsstoffe ausgewählt aus der Gruppe bestehend aus expandierbaren Graphiten (EG), Glimmer, Vermiculit, Hydrotalkit oder Mischungen daraus. Diese Gruppe der anorganischen Expansionsstoffe schließt vorzugsweise zusätzliche Reagenzien, wie z.B. Säuren ein, die durch das Einbringen von Energie unzersetzt verdampfen, und so zu einer Ausdehnung des Expansionsstoffes führen. Des Weiteren können die freigesetzten Säuredämpfe aber auch die flüssige Säure, insbesondere bei hohen Temperaturen, den eingeschlossenen Expansionsstoff chemisch angreifen und unter Freisetzung von weiteren bzw. neuen Gasen zu einer weiteren Ausdehnung des Expansionsstoffes führen.

Eine besonders bevorzugte Ausführungsform der vorliegenden Erfindung umfasst Azodicarbonamid (ADC) als organischen Expansionsstoff. Eine weitere besonders bevorzugte Ausführungsform der vorliegenden Erfindung umfasst expandierbare Graphite (EG) als erfindungsgemäßen anorganischen Expansionsstoff. Weitere Ausführungsformen umfassen Mischungen aus den oben genannten anorganischen und organischen Expansionsstoffen.

Erfindungsgemäß liegen die Expansionsstoffe in partikulärer Form vor, wobei die Partikel des Expansionsstoffes mindestens teilweise verkapselt sind. Bevorzugt sind die Expansionsstoffe im Wesentlichen vollständig verkapselt oder beschichtet. Unter einem solchen verkapselten Expansionsstoffwerden im Sinne der vorliegenden Erfindung solche Expansionsstoffe verstanden, die durch ein Hüllmaterial oder eine Beschichtung vor einer ungewollten und vorzeitigen Expansion, bzw. vor Feuchtigkeit sowie chemischen und thermischen Angriffen geschützt werden. Als Hüllmaterial oder Beschichtungsmaterial der Verkapselung können also solche Materialien verwendet werden, die eine beständige Hülle oder Schicht um den Expansionsstoff bilden, so dass der darin eingeschlossene Expansionsstoff vor und nach dem Aushärten vor der Klebstoffmatrix und anderen chemischen Reagenzien wie Kerosin, hydraulischen Flüssigkeiten und Feuchtigkeit geschützt wird. Ferner wird durch ein entsprechendes Hüllmaterial oder Beschichtungsmaterial auch die Klebstoffmatrix vor und nach dem Aushärten vor den Expansionsstoffen geschützt, indem z.B. reaktive Bestandteile des Expansionsstoffes bzw. darin eingeschlossene zusätzliche Reagenzien an einer Reaktion mit Bestandteilen der Klebstoffmatrix gehindert werden. Zusätzlich ist das Hüllmaterial oder Beschichtungsmaterial der erfindungsgemäßen Expansionsstoffe vorzugsweise hinreichend thermisch stabil, um den Schutz des darin eingeschlossenen Expansionsstoffes zu gewährleisten und dessen vorzeitige Expansion, z.B. in einem Temperaturbereich der üblicherweise in der Luftfahrtechnik auftritt, zu vermeiden. Des Weiteren ist das Hüllmaterial oder Beschichtungsmaterial bei einer Ausdehnung des Expansionsstoffes vorzugsweise dehnbar oder zerbrechbar, so dass der Expansionsstoff zum Lösen der Klebeverbindung vollständig expandieren kann.

Als Hüllmaterial oder Beschichtungsmaterial der Verkapselung werden Materialen gemäß Anspruch 1 verwendet

In bestimmten Ausführungsformen sind Polymere auf der Basis von Phenol-Formaldehyd-Harz, Harnstoff-Formaldehyd-Harz, Melamin-Formaldehyd-Harz, organische-anorganische Hybridsysteme, Keramiken, Glas, Metalloxiden als Hüllmaterial oder Beschichtungsmaterial des verkapselten Expansionsstoffes verwendbar.

In besonders bevorzugten Ausführungsformen ist das Hüllmaterial oder Beschichtungsmaterial des verkapselten Expansionsstoffes ausgewählt aus der Gruppe bestehend aus Glas, Melamin-Formaldehyd-Harz, Parylen, organische-anorganische Hybridsysteme, Cyanatbasiertem Polymer, Keramiken, Metalloxide.

Besonders bevorzugte Ausführungsformen der vorliegenden Erfindung umfassen ein- oder zweikomponentige Polyurethan-Klebstoffe als Klebstoffmatrix und Azodicarbonamid (ADC) als organischen Expansionsstoff, wobei das Hüllmaterial des Expansionsstoffes Melamin-Formaldehyd-Harz umfasst. Eine weitere besonders bevorzugte Ausführungsform der vorliegenden Erfindung umfasst ein- oder zweikomponentige Polyepoxid-Klebstoffe als Klebstoffmatrix und expandierbare Graphite (EG) als anorganischen Expansionsstoff, wobei das Hüllmaterial des Expansionsstoffes Melamin-Formaldehyd-Harz umfasst.

Der Gehalt an dem erfindungsgemäß verwendeten verkapselten Expansionsstoff kann in einem weiten Bereich variieren, sollte aber in einem Bereich liegen in dem die Klebstoff-Zusammensetzungen in den Klebeverbindungen noch eine ausreichende Klebkraft aufbauen kann. In einigen Ausführungsformen sollte der Mengenanteil des verkapselten Expansionsstoffes daher höchstens 45 Gew.-% betragen, noch bevorzugter höchstens 30 Gew.-% und am meisten bevorzugt höchstens 15 Gew.-%, jeweils bezogen auf das Gesamtgewicht der Klebstoff-Zusammensetzung.

Der verkapselte Expansionsstoff sollte außerdem in Mengen hinzugegeben werden, so dass eine ausreichende Expansion nach Einbringung von Energie zum Lösen der Klebeverbindungen erhalten wird. Bevorzugterweise liegt daher der Mengenanteil des verkapselten Expansionsstoffes in einem Mengenbereich von mindestens 1 Gew.-%, vorzugsweise in einem Mengenbereich von mindestens 5 Gew.-% und am meisten bevorzugt in einem Mengenbereich von mindestens 7,5 Gew.-%, jeweils bezogen auf das Gesamtgewicht der Klebstoff-Zusammensetzung.

Bestimmte Ausführungsformen umfassen daher 1 bis 45 Gew.-%, noch bevorzugter 5 bis 30 Gew.-% und am meisten bevorzugt 7,5 bis 15 Gew.-% des verkapselten Expansionsstoffes, jeweils bezogen auf das Gesamtgewicht der Klebstoff-Zusammensetzung.

Das Hüllmaterial oder Beschichtungsmaterial des verkapselten Expansionsstoffes der vorliegenden Klebstoff-Zusammensetzungen wird so eingestellt, dass dieses hinreichend thermisch stabil ist. Vorzugsweise gewährleistet das Hüllmaterial des verkapselten Expansionsstoffes, dass dieser bei Temperaturen beständig ist, die üblicherweise beim Aushärten von Klebstoff-Zusammensetzungen in Klebeverbindungen auftreten.

In bestimmten Ausführungsiformen gewährleistet das Hüllmaterial oder Beschichtungsmaterial des verkapselten Expansionsstoffes beim Aushärten eine thermische Beständigkeit bei einer Temperatur von 180 °C für mindestens 2 Stunden, noch bevorzugter bei einer Temperatur von 190 °C für mindestens 2 Stunden und am meisten bevorzugt bei einer Temperatur von 200 °C für mindestens 2 Stunden. Insbesondere gewährleistet das Hüllmaterial oder Beschichtungsmaterial des verkapselten Expansionsstoffes eine thermische Beständigkeit bis zu einer Temperatur von 180 °C für eine Dauer von 2 Stunden.

In einer weiteren bevorzugten Ausführungsform der vorliegenden Erfindung gewährleistet das Hüllmaterial oder Beschichtungsmaterial des verkapselten Expansionsstoffes eine dauernde thermische Stabilität in einem Anwendungsbereich der üblicherweise in der Luftfahrt auftritt. In einer besonders bevorzugten Ausführungsform gewährleistet der erfindungsgemäße Expansionsstoff daher eine dauernde thermische Stabilität bis zu einer Temperatur von 100 °C, noch bevorzugter bis zu einer Temperatur von 120 °C und am meisten bevorzugt bis zu einer Temperatur von 140 °C. Der Expansionsstoff der vorliegenden Erfindung bietet außerdem eine ausreichende Stabilität bei niedrigen Temperaturen, vorzugsweise bis zu einer Temperatur von -50 °C, noch bevorzugter bis zu einer Temperatur von -75 °C und am meisten bevorzugt bis zu einer Temperatur von -100 °C.

Bestimmte Ausführungsformen der vorliegenden Erfindung zeigen daher eine dauernde Stabilität in einem Temperaturbereich von -50 °C bis 100 °C, noch bevorzugter in einem Bereich von -75 °C bis 120 °C und am meisten bevorzugt in einem Bereich von -100 °C bis 140 °C.

Vorzugsweise liegen die Partikel des Expansionsstoffes mindestens teilweise verkapselt vor, das bedeutet, dass der Expansionsstoff mindestens teilweise von einem Hüllmaterial oder Beschichtungsmaterial eingeschlossen ist. In einer bevorzugten Ausführungsform sind 70 bis 100 % der Oberfläche des Expansionsstoffes mit dem Hüllmaterial oder Beschichtungsmaterial bedeckt, vorzugsweise 80 bis 100 %, noch bevorzugter 90 bis 100 % und am meisten bevorzugt 95 bis 100 %. In einer besonders bevorzugten Ausführungsform ist der Expansionsstoff vollständig in dem Hüllmaterial oder Beschichtungsmaterial eingeschlossen.

Im Allgemeinen weisen die verkapselten Expansionsstoffe eine mittlere Partikelgröße von <1 mm auf, bevorzugt ist eine Partikelgröße von <500 µm, noch bevorzugter ist eine Partikelgröße von <250 µm und am meisten bevorzugt ist eine Partikelgröße von <100 µm. Die durchschnittliche Partikelgröße der verkapselten Expansionsstoffe sollte jedoch geringer sein als die Schichtdicke der Klebstoffschicht der jeweiligen ausgehärteten Klebstoff-Zusammensetzungen. Vorzugsweise weisen die mikroverkapselten Expansionsstoffe eine mittlere Teilchengröße von 1 bis 150 µm und besonders bevorzugt zwischen 1 und 75 µm auf.

In einer bevorzugten Ausführungsform der vorliegenden Erfindung weisen die verkapselten Expansionsstoffe eine hinreichende Stabilität gegenüber mechanischen Belastungen in einem Anwendungsbereich auf, der üblicherweise in der Luftfahrt auftritt. Insbesondere zeigen die verkapselten Expansionsstoffe eine mindestens gleichwertige Stabilität gegenüber mechanischen Belastungen im Vergleich zu herkömmlichen Klebstoff-Zusammensetzungen. In einer weiteren bevorzugten Ausführungsform zeigen die verkapselten Expansionsstoffe eine verbesserte Stabilität gegenüber mechanischen Belastungen im Vergleich zu herkömmlichen Klebstoff-Zusammensetzungen.

Als weiteren Bestandteil kann das Hüllmaterial oder Beschichtungsmaterial des verkapselten Expansionsstoffes der erfindungsgemäßen Klebstoff-Zusammensetzungen einen oder mehrere aktive Füllstoffe umfassen.

Die Hauptaufgabe der aktiven Füllstoffe in dem Hüllmaterial oder Beschichtungsmaterial des verkapselten Expansionsstoffes der Klebstoff-Zusammensetzungen ist üblicherweise die gezielte Übertragung von Energie auf den Expansionsstoff, so dass sich dieser bei ausreichender Energie schneller erwärmen und expandieren kann, ohne dass angrenzende Bauteile überhitzt werden. Die Verteilung der aktiven Füllstoffe in dem Hüllmaterial oder Beschichtungsmaterial ist dabei so, dass sie sich nur an den Stellen befinden, an denen ihre Wirkung beim Lösen einer Klebeverbindung erforderlich ist. Vorzugsweise befinden sich die aktiven Füllstoffe daher in unmittelbarem Kontakt zu den Expansionsstoffen, an denen sie ihre Wirkung entfalten sollen. Bei einer Erwärmung wird somit ein unspezifisches Erwärmen der gesamten Klebeschicht bzw. angrenzender Bauteile vermieden. Aufgrund der gezielten Einbringung von Energie kann außerdem das Zeitintervall bis zur Expansion des Expansionsstoffes und dem folgenden Lösen der Klebeverbindung verkürzt sein.

Als aktive Füllstoffe in dem Hüllmaterial oder Beschichtungsmaterial des verkapselten Expansionsstoffes kommen grundsätzlich alle organischen oder anorganischen Verbindungen, Salze, Metalle, Metallverbindungen oder Materialien in Betracht, die zu einer Energieeintragung in der Lage sind und in dem Hüllmaterial oder Beschichtungsmaterial des verkapselten Expansionsstoffes eine ausreichende Stabilität zeigen.

Unter diesen sind in bestimmten Ausführungsformen die Metalle und Metallverbindungen bevorzugt. Hierbei kann es sich um ferro- oder ferrimagnetische, superparamagnetische, piezoelektrische Materialien oder Materialien mit hoher Wärmekapazität handeln.

Beispiele für geeignete aktive Füllstoffe umfassen in bestimmten Ausführungs-formen Bariumtitanat, Ethylendiamintartrat, Kalium-Natrium-Tartrat, Kaliumtartrat, Lithiumsulfat, Natriumtartrat, Quarz, Turmalin, Ferroelektrika mit Perowskitstruktur und Blei-Zirkonium-Titanat, sowie die Metalle Aluminium, Cobalt, Eisen, Kupfer, Nickel, oder deren Legierungen sowie Metalloxide vom Typ n-Maghemit (γ-Fe₂O₃), n-Magnetit (Fe₃O₄), Ferrite der allgemeinen Formel MeFe₂O₄, wobei Me für zweiwertige Metalle aus der Gruppe Cadmium, Calcium, Cobalt, Kupfer, Magnesium, Mangan, Nickel oder Zink steht, sowie Beryllium, Bor, Calcium, Graphit, Kalium, Magnesium, Phosphor oder Verbindungen der vorgenannten Stoffe, insbesondere Aluminiumoxid und -chlorid, Calciumcarbonat, Calciumchlorid, Haematit, Kupfersulfat, Magnetit, Magnesiumcarbonat und -chlorid, Phosphorchlorid, Phosphoroxid oder Mischungen davon.

Besonders bevorzugte Ausführungsformen umfassen Kupfer, Graphit und Ferrite der allgemeinen Formel MeFe₂O₄, wobei Me für zweiwertige Metalle aus der Gruppe Cadmium, Calcium, Cobalt, Kupfer, Magnesium, Mangan, Nickel oder Zink steht, oder Mischungen davon als aktiven Füllstoff zur Modifikation des Hüllmaterials oder Beschichtungsmaterials des verkapselten Expansionsstoffes.

Die Ausprägung der Energieeinbringung in den Expansionsstoff kann durch den Mengenanteil des aktiven Füllstoffes in dem Hüllmaterial oder Beschichtungsmaterial des verkapselten Expansionsstoffes festgelegt und variiert werden, da die erzielbare Temperatur und die Aufheizrate von der Konzentration und der Art des aktiven Füllstoffes abhängig ist. Durch eine Erhöhung der Menge an aktivem Füllstoff in dem Hüllmaterial oder Beschichtungsmaterial des erfindungsgemäßen Expansionsstoffes lassen sich dementsprechend höhere Temperaturen und kürzere Aufheizraten erzielen.

Der Gehalt an verwendeten zusätzlichen aktiven Füllstoffen in dem erfindungsgemäßen Expansionsstoff kann daher in einem weiten Bereich variieren, sollte aber in einem Bereich liegen, in dem eine Überhitzung verbundener Bauteile vermieden wird. In einigen Ausführungsformen sollte der Mengenanteil des aktiven Füllstoffes in dem Hüllmaterial oder Beschichtungsmaterial des verkapselten Expansionsstoffes daher höchstens 50 Gew.-% betragen, noch bevorzugter höchstens 20 Gew.-% und am meisten bevorzugt höchstens 10 Gew.-%, jeweils bezogen auf das Gesamtgewicht des verkapselten Expansionsstoffes.

Der aktive Füllstoff sollte außerdem in Mengen hinzugegeben werden, so dass eine ausreichende Energie zum Lösen der Klebeverbindungen in den verkapselten Expansionsstoff eingebracht werden kann. Vorzugsweise liegt daher der Mengenanteil des aktiven Füllstoffs in dem Hüllmaterial oder Beschichtungsmaterial des verkapselten Expansionsstoffes bei mindestens 0,1 Gew.-%, noch bevorzugter bei mindestens 1 Gew.-% und am meisten bevorzugt bei mindestens 2 Gew.-%, jeweils bezogen auf das Gesamtgewicht des Expansionsstoffes.

Bestimmte Ausführungsformen umfassen daher vorzugsweise 0,1 bis 50 Gew.-%, noch bevorzugter 1 bis 20 Gew.-% und am meisten bevorzugt 2 bis 10 Gew.-% des aktiven Füllstoffs in dem Hüllmaterial oder Beschichtungsmaterial des erfindungsgemäßen Expansionsstoffes, jeweils bezogen auf das Gesamtgewicht des verkapselten Expansionsstoffes.

Im Allgemeinen weisen die aktiven Füllstoffe eine mittlere Partikelgröße von <400 nm in dem Hüllmaterial oder Beschichtungsmaterial des verkapselten Expansionsstoffes auf, bevorzugt eine Partikelgröße von <250 nm, noch bevorzugter eine Partikelgröße von <100 nm und am meisten bevorzugt eine Partikelgröße von <50 nm. Die durchschnittliche Partikelgröße der aktiven Füllstoffe sollte jedoch geringer sein als die Schichtdicke des Hüllmaterials oder Beschichtungsmaterials der erfindungsgemäßen Expansionsstoffe. Vorzugsweise weisen die aktiven Füllstoffe eine mittlere Teilchengröße von 1 bis 100 nm und besonders bevorzugt zwischen 2 und 25 nm auf.

Diese erfindungsgemäßen verkapselten Expansionsstoffe können durch alle gängigen Verfahren hergestellt werden, durch die der Expansionsstoff verkapselt oder beschichtet werden kann. Insbesondere kann eine solche Verkapselung des Expansionsstoffes durch alle gängigen Mikroverkapselungsverfahren erzielt werden, insbesondere durch eine Grenzflächenpolymerisation, In-situ-Polymerisation oder Matrixpolymerisation. Besonders geeignet sind Verfahren zur Verkapselung bzw.

Beschichtung von Stoffen, wie die Wirbelschichttechnologie, die Koazervation, die Sprühtrocknung oder Sol-Gel-Verfahren.

Weiterhin können mischbare Zusatzstoffe zu den Klebstoff-Zusammensetzungen der vorliegenden Erfindung wie gewünscht hinzugefügt werden, wie z.B. Härter, Beschleuniger, Katalysatoren, zusätzliche Harze zur Verbesserung der Klebeeigenschaften, Thixotropiermittel, Weichmacher, Toughener, Klebehilfsstoffe, Stabilisierungsmittel, Farbstoffe, Tenside, Modifier, Füllstoffe, Lösungsmittel und Ähnliches, die üblicherweise in Klebstoff-Zusammensetzungen verwendet werden, jedoch die wesentlichen Merkmale der Zusammensetzungen nicht verschlechtern.

Die erfindungsgemäßen Klebstoff-Zusammensetzungen können zum Verbinden bzw. Lösen von Bauteilen aus Metall, Kunstoff, insbesondere temperaturbeständigem Kunstoff, Holz, Glas, natürlichen oder synthetischen Werkstoffen oder Verbundmaterialien hieraus verwendet werden. Sie kommen daher für das Verkleben bzw. Verbinden von Bauteilen im Innen- und Außenbereich, von Möbeln, Türen, Fensterrahmen, industriellen Bauteilen für den privaten und industriellen Gebrauch und für Bauteile in Transportvorrichtungen jeglicher Art, inklusive Flugzeugen, Kraftfahrzeugen und Schiffen in Betracht. Besonders bevorzugt sind dabei Anwendungen im Bereich der Luftfahrtechnik.

Die Klebstoff-Zusammensetzungen der vorliegenden Erfindung können dabei direkt in Form einer Flüssigkeit auf die zu verbindenden Bauteile aufgetragen werden, wobei eine Klebstoffschicht der jeweiligen Klebstoff-Zusammensetzung gebildet wird. In einer Ausführungsform können die Klebstoff-Zusammensetzungen vorzugsweise nur auf die Oberfläche eines Bauteils, das mit der Oberfläche eines anderen Bauteils verbunden werden soll, aufgetragen und anschließend mit diesem in Kontakt gebracht werden. In einer weiteren Ausführungsform können die Klebstoff-Zusammensetzungen auf die Oberfläche zweier oder mehrerer zu verbindenden Bauteile aufgetragen werden, die anschließend miteinander in Kontakt gebracht werden. In einer weiteren Ausführungsform kann zunächst eine Schicht der jeweiligen Klebstoff-Zusammensetzung gebildet und auf einem flexiblen Film getrocknet werden. Anschließend kann dieser trockene Film verwendet werden, um die zu verbindenden Bauteile zu befestigen/zu verkleben.

Das Auftragen der Klebstoff-Zusammensetzungen kann dabei in jeder Form erfolgen, die sicher stellt, dass die Klebstoffe die Oberflächen der Bauteile in der gewünschten Weise beschichten. Z.B. können die Klebstoff-Zusammensetzungen durch Sprühen oder durch eine Bürste oder Walze oder Gießen auf die Oberflächen aufgebracht werden. Eine andere Möglichkeit ist, dass die zu verbindenden Bauteile in die Klebstoff-Zusammensetzungen eingetaucht werden.

Ein Verfahren zum Verbinden von Bauteilen kann darin bestehen, dass eine erfindungsgemäße Klebstoff-Zusammensetzung auf die Oberfläche von mindestens einem Bauteil durch übliche Verfahren aufgetragen wird und die zu verbindenden Bauteile miteinander in Kontakt gebracht werden. Die entsprechende Klebeverbindung, umfassend eine Klebstoffschicht und mindestens zwei Bauteile, kann dann mittels erhöhter Temperatur oder induktiv durch den Einsatz eines elektrischen Feldes, magnetischen Feldes, elektromagnetischen Feldes, elektrischen Wechselfeldes, magnetischen Wechselfeldes oder elektromagnetischen Wechselfeldes auf eine Temperatur, bei der die Vernetzung der Klebstoffmatrix einsetzt, erwärmt und die Klebstoff-Zusammensetzung ausgehärtet werden.

Das Zeitintervall zum Aushärten der Klebstoff-Zusammensetzungen in den Klebeverbindungen kann je nach Zusammensetzung und optional verwendeter aktiver Füllstoffe variieren. Die Dauer des Aushärtens kann bei den induktiven Verfahren im Sekunden- bis Minutenbereich liegen, während bei den thermischen Härtungsverfahren eine vollständige Aushärtung meist innerhalb von 2 Stunden erzielt werden kann. Damit sind die erfindungsgemäßen Klebstoff-Zusammensetzungen insbesondere auch für die Härtung von empfindlichen Bauteilen geeignet. Außerdem ist dieses Verfahren energetisch sehr effizient.

Der durch das Aushärten der erfindungsgemäßen Klebstoff-Zusammensetzungen erhaltene Verbund aus Bauteilen umfasst somit mindestens zwei Bauteile und eine Klebstoffschicht in Form einer Klebeverbindung, wobei die Klebstoffschicht eine erfindungsgemäße Klebstoff-Zusammensetzung umfasst.

Das erfindungsgemäße Verfahren zum Lösen einer Klebeverbindung, die durch Aushärten der erfindungsgemäßen Klebstoff-Zusammensetzungen erhältlich ist, kann in einigen Ausführungsformen derart durchgeführt werden, dass die ausgehärtete Klebstoffschicht der Klebeverbindung mittels erhöhter Temperatur oder induktiv durch den Einsatz eines elektrischen Feldes, magnetischen Feldes, elektromagnetischen Feldes, elektrischen Wechselfeldes, magnetischen Wechselfeldes oder elektromagnetischen Wechselfeldes auf die für eine Expansion des verkapselten Expansionsstoffes erforderliche Temperatur erwärmt wird. In weiteren Ausführungsformen kann die für die Expansion des verkapselten Expansionsstoffes erforderliche Energie auch mittels IR-, UV- oder Mikrowellenenergie eingebracht werden. Im Falle der Energieeinbringung mittels Mikrowellenenergie kann das Lösen der Klebeverbindungen schon innerhalb weniger Minuten (z.B. 10 s bis 5 min) erfolgen.

Der in der Klebstoffschicht der Klebeverbindungen enthaltene verkapselte Expansionsstoff wird dabei auf eine Temperatur erwärmt, die ausreicht, um eine Expansion des darin eingeschlossenen Expansionsstoffes zu bewirken, so dass verbundene Bauteile voneinander getrennt werden können. In einer besonders bevorzugten Ausführungsform können die Bauteile schließlich per Hand voneinander getrennt werden. Enthalten die Klebstoff-Zusammensetzungen zusätzlich aktive Füllstoffe, so kann die ausgehärtete Klebstoffschicht der jeweiligen Klebeverbindung auf eine Temperatur erwärmt werden, bei der die aktiven Füllstoffe eine ausreichende Energie auf den eingeschlossenen Expansionsstoff übertragen, um eine Expansion des Expansionsstoffes zu erzielen, so dass verbundene Bauteile voneinander getrennt werden können.

Das Lösen der Klebeverbindungen kann dabei mit üblicherweise für diese Zwecke verwendeten Geräten erfolgen. Die jeweils benötigten Geräte, Parameter und Geräteeinstellungen hängen dabei von der verwendeten Klebstoff-Zusammensetzung ab. Des Weiteren hängt die zum Lösen erforderliche Temperatur von der Wärmestabilität des jeweiligen verkapselten Expansionsstoffes und optionaler aktiver Füllstoffe und deren Gehalt in der Klebstoffmatrix ab. Auf Grund der lokalen Nähe des Hüllmaterials oder Beschichtungsmaterials und der optionalen aktiven Füllstoffe zu dem in dem Hüllmaterial oder Beschichtungsmaterial eingeschlossenen Expansionsstoff, erfolgt die Einbringung der Energie und somit auch das Lösen der Klebeverbindung besonders effektiv.

Im folgenden sind Beispiele vorteilhafter Ausführungsformen der erfindungsgemäßen Klebstoff-Zusammensetzungen aufgeführt, dabei sind, wie alle anderen %-Angaben in dieser Beschreibung auch, %-Angaben als Gew.-%, bezogen auf das Gesamtgewicht der Klebstoff-Zusammensetzung angegeben:

### Beispiel 1 (Referenzproben)

Bauteile aus einem Kohlenstofffaser-Kunststoff-Verbundwerkstoff (CFK) wurden mit einer Polyurethan-Klebstoff-Zusammensetzung (Pliogrip 9400/9405 der Firma Ashland) in Kontakt gebracht und die Klebeverbindung gemäß der Norm DIN EN 1465 hergestellt und ausgehärtet.

Die Zugscherfestigkeit für einen Teil dieser Proben wurde bei Raumtemperatur (RT; ca. 20°C) geprüft. Die Zugscherfestigkeit der Referenzproben entsprach (15,5 +/-1,3) MPa. Ein anderer Teil der Referenzproben wurde 10 min bei 200 °C gelagert. Nach Abkühlen auf RT wurden diese Proben bei RT geprüft. Die Zugscherfestigkeit der Referenz-Proben entsprach (19,3 +/- 0,4) MPa. Diese Erhöhung der Zugscherfestigkeit entspricht einem üblichen Nachhärtungseffekt.

### Beispiel 2

Klebeverbindungen wurden wie unter Beispiel 1 beschrieben hergestellt und ausgehärtet, wobei dem Polyurethan-Klebstoff 10 Gew.-% Azodicarbonamid (ADC; Porofor^{®} ADC M/C1 der Firma Lanxess AG, Leverkusen, Deutschland) als Expansionsstoff homogen mit Hilfe eines Speed-Mixers zugemischt wurden.

Die Zugscherfestigkeit für einen Teil dieser Proben wurde bei RT geprüft. Die Zugscherfestigkeit der Proben entsprach (17,3 +/- 2,0) MPa.

Ein anderer Teil dieser Proben wurde 10 min bei 200 °C gelagert. Nach Abkühlen auf RT wurden diese Proben bei RT geprüft. Die Zugscherfestigkeit der Proben entsprach (0,45 +/- 0,03) MPa

### Beispiel 3

Klebeverbindungen wurden wie unter Beispiel 1 beschrieben hergestellt und ausgehärtet, wobei dem Polyurethan-Klebstoff 10 Gew.-% Azodicarbonamid (ADC; Porofor^{®} ADC M/C1 der Firma Lanxess AG, Leverkusen, Deutschland) als Expansionsstoffhomogen mit Hilfe eines Speed-Mixers zugemischt wurden, wobei das Azodicarbonamid mittels Koazervation mit Melaminformaldehyd (MF) verkapselt wurde (kommerziell erhältlich von der Firma Pharmarom GmbH).

Die Zugscherfestigkeit für einen Teil dieser Proben wurde bei RT geprüft. Die Zugscherfestigkeit der Proben entsprach (20,2 +/- 1,3) MPa.
Ein anderer Teil dieser Proben wurde 10 min bei 200 °C gelagert. Nach Abkühlen auf RT wurden diese Proben bei RT geprüft. Die Zugscherfestigkeit der Proben entsprach (0,69 +/- 0,07) MPa

Beispiel 3 zeigt, dass eine Klebstoff-Zusammensetzung gemäß der vorliegenden Erfindung im Vergleich zu einer Referenzprobe (Beispiel 1) bzw. einer Probe , in der der Expansionsstoff nicht verkapselt oder beschichtet ist (Beispiel 2), eine ausgezeichnete Klebkraft in Klebeverbindungen entwickelt und gleichzeitig verbesserte Alterungserscheinungen und eine lange Anwendungsdauer gewährleistet. Des Weiteren sind diese Klebeverbindungen leicht lösbar, so dass verbundene Teile weder beschädigt noch zerstört werden.

### Beispiel 4 (Referenzproben)

Bauteile aus einem Kohlenstofffaser-Kunststoff-Verbundwerkstoff (CFK) wurden mit einer Polyepoxid-Klebstoff-Zusammensetzung bestehend aus DGEBA-Harz Epikote Resin 162 der Firma Hexion, Polyaminoamid-Härter Polypox P502 der Firma UPPC, ATBN-Toughener Hycar 1300x16 der Firma Emerald und Thixotropiermittel Aerosil R805 der Firma Degussa-Hüls in Kontakt gebracht und die Klebeverbindung gemäß der Norm DIN EN 1465 hergestellt und ausgehärtet. Die Zugscherfestigkeit für einen Teil dieser Proben wurde bei RT geprüft. Die Zugscherfestigkeit der Referenzproben entsprach (23,6 +/- 2,9) MPa.

Ein anderer Teil dieser Proben wurde 10 min bei 200 °C gelagert. Nach Abkühlen auf RT wurden diese Proben bei RT geprüft. Die Zugscherfestigkeit der Referenzproben entsprach (29,9 +/- 2,3) MPa.

### Beispiel 5

Klebeverbindungen wurden wie unter Beispiel 4 beschrieben hergestellt und ausgehärtet, wobei dem Polyepoxid-Klebstoff 10 Gew.-% des expandierbaren Graphits NordMin KP 251 (Nordmann & Rassmann) als Expansionsstoff homogen mit Hilfe eines Speed-Mixers zugemischt wurden.

Die Zugscherfestigkeit für einen Teil dieser Proben wurde bei RT geprüft. Die Zugscherfestigkeit der Proben entsprach (21,6 +/- 3,4) MPa.

Ein anderer Teil der Proben wurde 10 min bei 200 °C gelagert. Nach Abkühlen auf RT wurden diese Proben bei RT geprüft. Die Zugscherproben konnten ohne weitere mechanische Belastung getrennt werden.

### Beispiel 6

Klebeverbindungen wurden wie unter Beispiel 4 beschrieben hergestellt und ausgehärtet, wobei dem Polyepoxid-Klebstoff 10 Gew.-% des expandierbaren Graphits NordMin KP 351 (Nordmann & Rassmann) als Expansionsstoff homogen mit Hilfe eines Speed-Mixers zugemischt wurden.

Die Zugscherfestigkeit für einen Teil dieser Proben wurde bei RT geprüft. Die Zugscherfestigkeit der Proben entsprach (22,4 +/- 0,8) MPa.

Ein anderer Teil dieser Proben wurde 10 min bei 200 °C gelagert. Nach Abkühlen auf RT wurden diese Proben bei RT geprüft. Die Zugscherproben konnten ohne weitere mechanische Belastung getrennt werden.

### Beispiel 7

Klebeverbindungen wurden wie unter Beispiel 4 beschrieben hergestellt und ausgehärtet, wobei dem Polyepoxid-Klebstoff 10 Gew.-% des expandierbaren Graphits NordMin KP 251 (Nordmann & Rassmann) als Expansionsstoff homogen mit Hilfe eines Speed-Mixers zugemischt wurden, wobei der expandierbare Graphit mittels Koazervation mit Melaminformaldehyd (MF) verkapselt wurde (kommerziell erhältlich von der Firma Pharmarom GmbH).

Die Zugscherfestigkeit für einen Teil dieser Proben wurde bei RT geprüft. Die Zugscherfestigkeit der Proben entsprach (22,1 +/- 1,3) MPa.

Ein anderer Teil der Proben wurde 10 min bei 200 °C gelagert. Nach Abkühlen auf RT wurden diese Proben bei RT geprüft. Die Zugscherproben konnten ohne weitere mechanische Belastung getrennt werden.

### Beispiel 8

Klebeverbindungen wurden wie unter Beispiel 4 beschrieben hergestellt und ausgehärtet, wobei dem Polyepoxid-Klebstoff 10 Gew.-% des expandierbaren Graphits NordMin KP 351 (Nordmann & Rassmann) als Expansionsstoff homogen mit Hilfe eines Speed-Mixers zugemischt wurden, wobei der expandierbare Graphit mittels Koazervation mit Melaminformaldehyd (MF) verkapselt wurde (kommerziell erhältlich von der Firma Pharmarom GmbH).
Die Zugscherfestigkeit für einen Teil dieser Proben wurde bei RT geprüft. Die Zugscherfestigkeit der Proben entsprach (23,3 +/- 0,4) MPa.
Ein anderer Teil dieser Proben wurde 10 min bei 200 °C gelagert. Nach Abkühlen auf RT wurden diese Proben bei RT geprüft. Die Zugscherproben konnten ohne weitere mechanische Belastung getrennt werden.

Beispiele 7 und 8 zeigen, dass Klebeverbindungen, die Klebstoff-Zusammensetzungen gemäß der vorliegenden Erfindung umfassen im Vergleich zu einer Referenzprobe (Beispiel 4) bei Bedarf ohne zusätzliche mechanische Belastung lösbar sind, so dass verbundene Proben weder beschädigt oder zerstört werden. Die Klebstoff-Zusammensetzungen gewährleisten außerdem eine gleichwertige Beständigkeit gegenüber mechanischen Belastungen im Vergleich zu Proben, in denen der Expansionsstoff nicht verkapselt oder beschichtet ist (Beispiele 5 und 6).

### Beispiel 9

Proben der unverkapselten bzw. verkapselten Expansionsstoffe der in den Beispielen 6 und 8 hergestellten Klebstoff-Zusammensetzungen wurden ionenchromatographisch untersucht. Dazu wurden mehrere Proben von jeweils 2 g der verwendeten Expansionsstoffe (expandierbarer Graphit NordMin KP 351) in jeweils 4 g Wasser gegeben und bei RT geschüttelt. Zu verschiedenen Zeitpunkten wurden Proben entnommen, abfiltriert und die Menge an freigesetzter Säure in den erhaltenen Filtraten mittels Ionenchromatographie bestimmt.

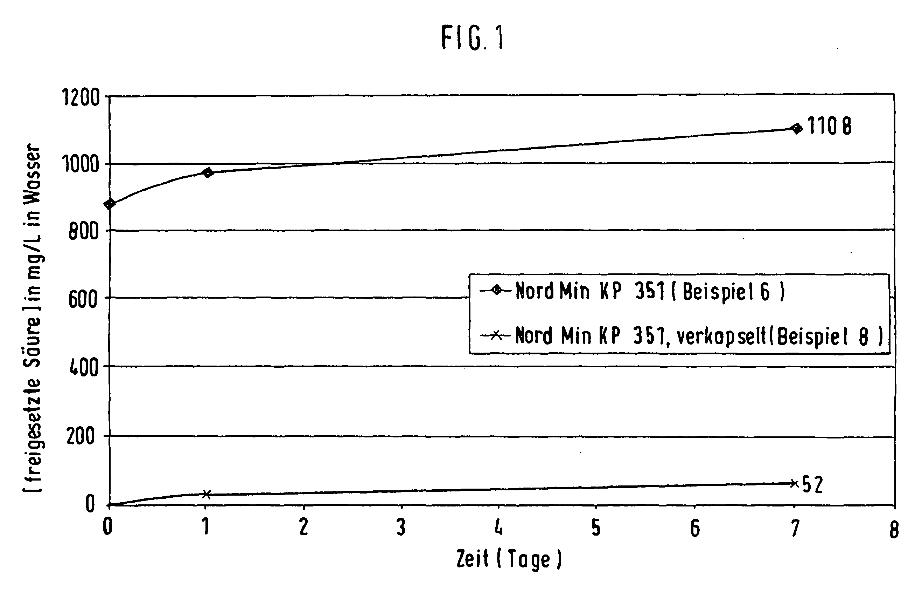

Die Figur 1 zeigt die durch die Ionenchromatographie bestimmte Menge an freigesetzter Säure in Wasser für den Expansionsstoff NordMin KP 351 aus Beispiel 6 und den Expansionsstoff NordMin KP 351 aus Beispiel 8, wobei dieser mittels Koazervation mit Melaminformaldehyd (MF) beschichtet wurde, zu unterschiedlichen Zeitpunkten.

### Beispiel 10

Proben der unverkapselten bzw. verkapselten Expansionsstoffe der in den Beispielen 5 und 7 hergestellten Klebstoff-Zusammensetzungen wurden ionenchromatographisch untersucht. Dazu wurden mehrere Proben von jeweils 2 g der verwendeten Expansionsstoffe (expandierbarer Graphit NordMin KP 251) in jeweils 4 g Wasser gegeben und bei RT geschüttelt. Zu verschiedenen Zeitpunkten wurden Proben entnommen, abfiltriert und die Menge an freigesetzter Säure in den erhaltenen Filtraten mittels Ionenchromatographie bestimmt.

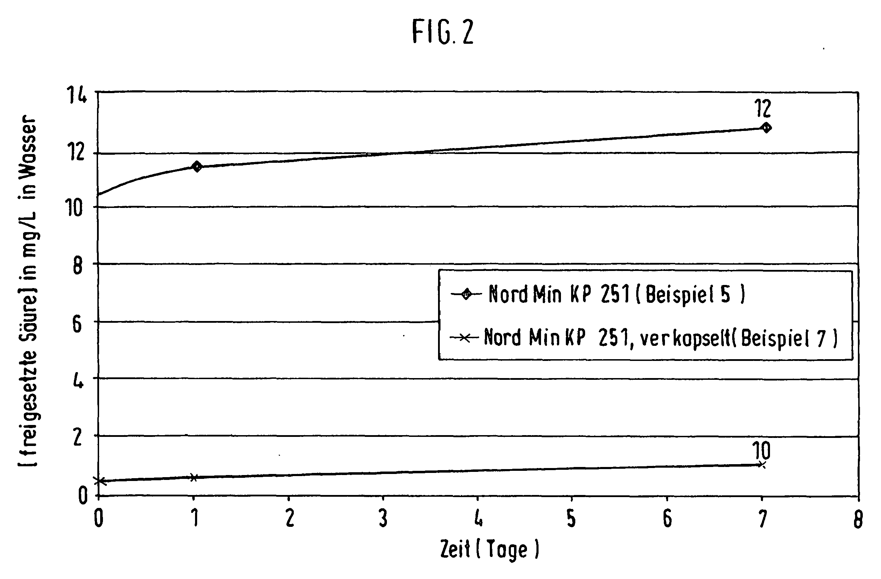

Die Figur 2 zeigt die durch die Ionenchromatographie bestimmte Menge an freigesetzter Säure in Wasser für den Expansionsstoff NordMin KP 251 aus Beispiel 5 und den Expansionsstoff NordMin KP 251 aus Beispiel 7, wobei dieser mittels Koazervation mit Melaminformaldehyd (MF) beschichtet wurde, zu unterschiedlichen Zeitpunkten:
Beispiele 9 und 10 zeigen, dass erfindungsgemäße Expansionsstoffe im Vergleich zu entsprechenden Expansionsstoffen, die nicht verkapselt oder beschichtet sind (Beispiele 5 und 7), weniger Säure freisetzen und die Klebstoffmatrix vor und nach dem Aushärten vor diesen reaktiven Bestandteilen geschützt wird. Die Klebstoff-Zusammensetzungen gemäß der vorliegenden Erfindung gewährleisten somit verbesserte Alterungserscheinungen und eine lange Anwendungsdauer.

## Patentansprüche

1. Klebstoff-Zusammensetzungen für lösbare Klebeverbindungen, umfassend eine Klebstoffmatrix und einen partikelförmigen Expansionsstoff, wobei die Partikel des Expansionsstoffes mindestens teilweise verkapselt und/oder beschichtet sind, wobei das Hüllmaterial bzw. Beschichtungsmaterial des Expansionsstoffes ausgewählt ist aus der Gruppe bestehend aus Glas, Keramiken, Metallen, Metalloxiden, organisch-anorganischen Hybrid-Systemen, Phenol-Formaldehyd-Harzen, Harnstoff-Formaldehyd-Harzen, Melamin-Formaldehyd-Harzen, Parylen, oder cyanatbasiertem Polymer.

2. Klebstoff-Zusammensetzungen nach Anspruch 1, wobei der Expansionsstoff mindestens einen Stoff ausgewählt aus der Gruppe bestehend aus einem anorganischen Expansionsstoff oder einem organischen Expansionsstoff umfasst.

3. Klebstoff-Zusammensetzungen nach Anspruch 2, wobei der organische Expansionsstoff Azodicarbonamid (ADC) umfasst oder der anorganische Expansionsstoff expandierbare Graphite (EG) umfasst.

4. Klebstoff-Zusammensetzungen nach einem der Ansprüche 1 bis 3, wobei der Mengenanteil des verkapselten Expansionsstoffes 1 bis 45 Gew.-% beträgt, noch bevorzugter 5 bis 30 Gew.-% und am meisten bevorzugt 7,5 bis 15 Gew.-%, jeweils bezogen auf das Gesamtgewicht der Klebstoff-Zusammensetzung.

5. Klebstoff-Zusammensetzungen nach einem der Ansprüche 1 bis 4, wobei das Hüllmaterial oder Beschichtungsmaterial des verkapselten Expansionsstoffes ferner einen aktiven Füllstoff umfasst.

6. Klebstoff-Zusammensetzungen nach Anspruch 5, wobei der aktive Füllstoff ausgewählt ist aus der Gruppe bestehend aus ferro- oder ferrimagnetischen, superparamagnetischen, piezoelektrischen Materialien, Materialien mit hoher Wärmekapazität oder Mischungen daraus.

7. Klebstoff-Zusammensetzungen nach einem der Ansprüche 5 oder 6, wobei der aktive Füllstoff ausgewählt ist aus der Gruppe bestehend aus Bariumtitanat, Ethylendiamintartrat, Kalium-Natrium-Tartrat, Kaliumtartrat, Lithiumsulfat, Natriumtartrat, Quarz, Turmalin, Ferroelektrika mit Perowskitstruktur und Blei-Zirkonium-Titanat, sowie die Metalle Aluminium, Cobalt, Eisen, Kupfer, Nickel, oder deren Legierungen sowie Metalloxide vom Typ n-Maghemit (γ-Fe₂O₃), n-Magnetit (Fe₃O₄), Ferrite der allgemeinen Formel MeFe₂O₄, wobei Me für zweiwertige Metalle aus der Gruppe Cadmium, Calcium, Cobalt, Kupfer, Magnesium, Mangan, Nickel oder Zink steht, sowie Beryllium, Bor, Calcium, Graphit, Kalium, Magnesium, Phosphor oder Verbindungen der vorgenannten Stoffe, insbesondere Aluminiumoxid und -chlorid, Calciumcarbonat, Calciumchlorid, Haematit, Kupfersulfat, Magnetit, Magnesiumcarbonat und -chlorid, Phosphorchlorid, Phosphoroxid oder Mischungen daraus, insbesondere mindestens einen aktive Füllstoff ausgewählt aus der Gruppe bestehend aus Kupfer, Graphit, Ferriten der allgemeinen Formel MeFe₂O₄, wobei Me für zweiwertige Metalle aus der Gruppe Cadmium, Calcium, Cobalt, Kupfer, Magnesium, Mangan, Nickel oder Zink steht, oder Mischungen daraus.

8. Klebstoff-Zusammensetzungen nach einem der Ansprüche 5 bis 7, wobei der Mengenanteil des aktiven Füllstoffes 0,1 bis 50 Gew.-%, noch bevorzugter 1 bis 20 Gew.-% und am meisten bevorzugt 2 bis 10 Gew.-%, jeweils bezogen auf das Gesamtgewicht des Expansionsstoffes, beträgt.

9. Klebstoff-Zusammensetzungen nach einem der Ansprüche 1 bis 8, wobei die Klebstoffmatrix ausgewählt ist aus der Gruppe bestehend aus Schmelzklebstoffen, lösemittelhaltigen Nassklebstoffen, Kontakt- und Dispersionsklebstoffen, wasserbasierten Klebstoffen, Plastisole, Polymerisationsklebstoffen, Polyadditionsklebstoffe, Polykondensationsklebstoffe oder Mischungen daraus.

10. Verwendung einer Klebstoff-Zusammensetzung nach einem der Ansprüche 1 bis 9 in einem Verfahren zum Verbinden von Bauteilen, umfassend die folgenden Schritte:
a) Aufbringen der Klebstoff-Zusammensetzung auf mindestens eine Oberfläche von mindestens einem Bauteil,
b) Inkontaktbringen der klebstofftragenden Oberflächen des Bauteils aus dem Schritt a) mit mindestens einem weiteren Bauteil und
c) Aushärten der Klebstoff-Zusammensetzung zur Erzeugung einer Klebeverbindung umfassend eine Klebstoffschicht und mindestens zwei Bauteile.

11. Verwendung einer Klebstoff-Zusammensetzung nach einem der Ansprüche 1 bis 9 in einem Verfahren zum Lösen von mit der Klebstoff-Zusammensetzung verbundenen Bauteilen, umfassend die folgenden Schritte:
a) Erwärmen der Klebeverbindung auf mindestens die Expansionstemperatur des verkapselten Expansionsstoffes und
b) Trennen der verbundenen Bauteile.

12. Verbund aus mindestens zwei Bauteilen und einer Klebstoffschicht, wobei die Klebstoffschicht eine Klebstoff-Zusammensetzung nach einem der Ansprüche 1 bis 9 umfasst.

13. Verbund nach Anspruch 12, wobei die Bauteile aus Metall, Kunststoff, Holz, Glas, natürlichem oder synthetischem Werkstoff oder einem Verbundmaterial hieraus bestehen.

14. Verwendung einer Klebstoff-Zusammensetzung nach einem der Ansprüche 1 bis 9 oder eines Verbundes nach einem der Ansprüche 12 oder 13 im Flugzeug-, Fahrzeug- oder Schiffsbau.

15. Flugzeug-, Fahrzeug- oder Schiffsbauten, aufweisend eine Klebstoff-Zusammensetzung nach einem der Ansprüche 1 bis 9 oder einem Verbund nach einem der Ansprüche 12 oder 13.

## Claims

1. Adhesive compositions for detachable adhesive bonds, comprising an adhesive matrix and an expansion material in particulate form, wherein the particles of the expansion material are at least partially encapsulated and/or coated, wherein the encapsulation material or coating material of the expansion material is selected from the group consisting of glass, ceramics, metals, metal oxides, organic-inorganic hybrid systems, phenol formaldehyde resins, urea formaldehyde resins, melamine formaldehyde resins, parylene or cyanate-based polymer.

2. Adhesive compositions as claimed in claim 1, wherein the expansion material comprises at least one material selected from the group consisting of an inorganic expansion material or an organic expansion material.

3. Adhesive compositions as claimed in claim 2, wherein the organic expansion material comprises azodicarbonamide (ADC) or the inorganic expansion material comprises expandable graphite (EG).

4. Adhesive compositions as claimed in any one of claims 1 to 3, wherein the quantitative proportion of the encapsulated expansion material amounts to 1 to 45% by weight, more preferably 5 to 30% by weight and most preferably 7.5 to 15% by weight, in each case based on the total weight of the adhesive composition.

5. Adhesive compositions as claimed in any one of claims 1 to 4, wherein the encapsulation material or coating material of the encapsulated expansion material further comprises an active filler.

6. Adhesive compositions as claimed in claim 5, wherein the active filler is selected from the group consisting of ferromagnetic or ferrimagnetic, superparamagnetic, piezoelectric materials, materials having a high thermal capacity or mixtures thereof.

7. Adhesive compositions as claimed in any one of claims 5 or 6, wherein the active filler is selected from the group consisting of barium titanate, ethylenediamine tartrate, potassium-sodium tartrate, potassium tartrate, lithium sulphate, sodium tartrate, quartz, tourmaline, ferroelectrics with a perovskite structure and lead-zirconium titanate, and the metals aluminium, cobalt, iron, copper, nickel or their alloys, and metal oxides of the type n-maghemite (γ-Fe₂O₃), n-magnetite (Fe₃O₄), ferrites of the general formula MeFe₂O₄, where Me stands for bivalent metals of the group cadmium, calcium, cobalt, copper, magnesium, manganese, nickel or zinc, and beryllium, boron, calcium, graphite, potassium, magnesium, phosphorus or compounds of the aforementioned materials, in particular aluminium oxide and aluminium chloride, calcium carbonate, calcium chloride, hematite, copper sulphate, magnetite, magnesium carbonate and magnesium chloride, phosphorus chloride, phosphorus oxide or mixtures thereof, in particular at least one active filler selected from the group consisting of copper, graphite, ferrites of the general formula MeFe₂O₄, where Me stands for bivalent metals of the group cadmium, calcium, cobalt, copper, magnesium, manganese, nickel or zinc, or mixtures thereof.

8. Adhesive compositions as claimed in any one of claims 5 to 7, wherein the quantitative proportion of the active filler amounts to 0.1 to 50% by weight, more preferably 1 to 20% by weight and most preferably 2 to 10% by weight, in each case based on the total weight of the expansion material.

9. Adhesive compositions as claimed in any one of claims 1 to 8, wherein the adhesive matrix is selected from the group consisting of hot-melt adhesives, solvent-containing wet adhesives, contact and dispersion adhesives, water-based adhesives, plastisols, polymerisation adhesives, polyaddition adhesives, polycondensation adhesives or mixtures thereof.

10. Use of an adhesive composition as claimed in any one of claims 1 to 9 in a method for bonding components, comprising the steps of:
a) applying the adhesive composition to at least one surface of at least one component,
b) bringing the surfaces of the component of step a) which carry the adhesive into contact with at least one further component, and
c) curing the adhesive composition for producing an adhesive bond comprising an adhesive layer and at least two components.

11. Use of an adhesive composition as claimed in any one of claims 1 to 9 in a method for detaching components bonded by the adhesive composition, comprising the steps of:
a) heating the adhesive bond to at least the expansion temperature of the encapsulated expansion material, and
b) separating the bonded components.

12. Composite consisting of at least two components and one adhesive layer, wherein the adhesive layer comprises an adhesive composition as claimed in any one of claims 1 to 9.

13. Composite as claimed in claim 12, wherein the components consist of metal, synthetic material, wood, glass, natural or synthetic material or a composite material thereof.

14. Use of an adhesive composition as claimed in any one of claims 1 to 9 or of a composite as claimed in any one of claims 12 or 13 in aircraft construction, vehicle construction or shipbuilding.

15. Aircraft, vehicle or ship constructions, comprising an adhesive composition as claimed in any one of claims 1 to 9 or a composite as claimed in any one of claims 12 or 13.

## Revendications

1. Compositions d'adhésif pour des liaisons par collage détachables, comprenant une matrice d'adhésif et un matériau d'expansion sous forme de particules, où les particules du matériau d'expansion sont au moins partiellement encapsulées et/ou revêtues, où le matériau de l'enveloppe, respectivement le matériau de revêtement, du matériau d'expansion est choisi dans le groupe constitué du verre, de céramiques, d'oxydes métalliques, de systèmes hybrides organiques-minéraux, de résines phénol-formaldéhyde, de résines urée-formaldéhyde, de résines mélamine-formaldéhyde, de parylène ou d'un polymère basé sur du cyanate.

2. Compositions d'adhésif selon la revendication 1, où le matériau d'expansion comprend au moins une substance choisie dans le groupe constitué d'un matériau d'expansion minéral ou d'un matériau d'expansion organique.

3. Compositions d'adhésif selon la revendication 2, où le matériau d'expansion organique comprend de l'azodicarbonamide (ADC) ou le matériau d'expansion comprend du des graphites expansés (EG).

4. Compositions d'adhésif selon l'une des revendications 1 à 3, où la proportion de matériau d'expansion encapsulé est de 1 à 45 % en poids, plus préférentiellement de 5 à 30 % en poids et le plus préférentiellement de 7,5 à 15 % en poids, chaque fois, par rapport au poids total de la composition d'adhésif.

5. Compositions d'adhésif selon l'une des revendications 1 à 4, où le matériau d'enveloppe ou le matériau de revêtement du matériau d'expansion encapsulé comprend en outre une charge active.

6. Compositions d'adhésif selon la revendication 5, où la charge active est choisie dans le groupe constitué de matériaux ferromagnétiques ou ferrimagnétiques, super paramagnétiques, piézoélectriques, de matériaux avec des capacités calorifiques élevées ou de mélanges de ceux-ci.

7. Compositions d'adhésif selon l'une des revendications 5 ou 6, où la charge active est choisie dans le groupe constitué du titanate de baryum, du tartrate d'éthylène diamine, du tartrate de potassium et de sodium, du tartrate de potassium, du sulfate de lithium, du tartrate de sodium, de quartz, de tourmaline, de ferroélectriques avec des structures de pérovskite et du titanate de plomb et de zirconium, ainsi que des métaux aluminium, cobalt, fer, cuivre, nickel, ou leurs alliages, ainsi que des oxydes métalliques du type n-maghémite (γFe₂O₃), n-magnétite (Fe₃O₄), des ferrites de la formule générale MeFe₂O₄, où Me désigne des métaux bivalents du groupe constitué du cadmium, du calcium, du cobalt, du cuivre, du magnésium, du manganèse, du nickel ou du zinc, ainsi que du béryllium, du bore, du calcium, du graphite, du potassium, du magnésium, du phosphore ou de composés des substances précitées, notamment l'oxyde d'aluminium et le chlorure d'aluminium, le carbonate de calcium, le chlorure de calcium, l'hématite, le sulfate de cuivre, la magnétite, le carbonate et le chlorure de magnésium, les chlorures de phosphore, les oxydes de phosphore ou des mélanges de ceux-ci, notamment au moins une charge active choisie dans le groupe constitué du cuivre, du graphite, des ferrites de la formule générale MeFe₂O₄, où Me désigne des métaux bivalents du groupe constitué par le cadmium, le calcium, le cobalt, le cuivre, le magnésium, le manganèse, le nickel ou le zinc, ou des mélanges de ceux-ci.

8. Compositions d'adhésif selon l'une des revendications 5 à 7, où la proportion de charge active est de 0,1 à 50 % en poids, plus préférentiellement de 1 à 20 % en poids et le plus préférentiellement de 2 à 10 % en poids, chaque fois, par rapport au poids total du matériau d'expansion.

9. Compositions d'adhésif selon l'une des revendications 1 à 8, où la matrice d'adhésif est choisie dans le groupe constitué des adhésifs fusibles à chaud, des adhésifs à collage à l'état humide contenant des solvants, des adhésifs de contact et des dispersions adhésives, des adhésifs à base d'eau, des plastisols, des adhésifs de polymérisation, des adhésifs de polyaddition, des adhésifs de polycondensation ou de mélanges de ceux-ci.

10. Utilisation d'une composition d'adhésif selon l'une des revendications 1 à 9 dans un procédé pour la liaison de pièces de construction, comprenant les étapes suivantes :
a) étalement de la composition d'adhésif sur au moins une surface d'au moins une pièce de construction,
b) mise en contact des surfaces de la pièce de construction portant l'adhésif provenant de l'étape a) avec au moins une autre pièce de construction, et
c) durcissement de la composition d'adhésif pour la réalisation d'une liaison adhésive comprenant une couche d'adhésif et au moins deux pièces de construction.

11. Utilisation d'une composition d'adhésif selon l'une des revendications 1 à 9 dans un procédé pour le détachement de pièces de construction reliées avec la composition d'adhésif, comprenant les étapes suivantes :
a) réchauffement de la liaison adhésive jusqu'à au moins la température d'expansion du matériau d'expansion encapsulé et
b) séparation des pièces reliées.

12. Composite constitué d'au moins deux pièces et d'une couche d'adhésif, où la couche d'adhésif comprend une composition d'adhésif selon l'une des revendications 1 à 9.

13. Composite selon la revendication 12, où les pièces sont constituées de métal, de matière plastique, de bois, de verre, d'un produit manufacturé naturel ou synthétique ou d'un matériau composite de ceux-ci.

14. Utilisation d'une composition d'adhésif selon l'une des revendications 1 à 9 ou d'un composite selon l'une des revendications 12 ou 13 dans la construction aéronautique, automobile ou navale.

15. Constructions aéronautique, automobile ou navale présentant une composition d'adhésif selon l'une des revendications 1 à 9 ou un composite selon l'une des revendications 12 ou 13.
